# EUROPÄISCHE PATENTSCHRIFT

(11) **EP 0 874 364 B1**
(45) Veröffentlichungstag und Bekanntmachung des Hinweises auf die Patenterteilung: **21.11.2001**
(21) Anmeldenummer: 98109857.7
(22) Anmeldetag: 29.06.1992
(51) Int. Cl.: G11B 19/20, G11B 33/14, H02K 5/10, H02K 5/173

(54) **Plattenspeicher**
Disk storage unit
Unité de mémoire pour disques

(30) Priorität: 29.06.1991 DE 4121425
(43) Veröffentlichungstag der Anmeldung: 28.10.1998
(62) Teilanmeldung aus: 92111002.9
(73) Patentinhaber: Papst Licensing GmbH & Co. KG, 78549 Spaichingen (DE)
(72) Erfinder: Hans, Helmut, Dr., 7742 St. Georgen (DE); Oelsch, Jürgen, 97618 Hohenroth (DE)
(74) Vertreter: Henkel, Feiler, Hänzel

(56) Entgegenhaltungen:
- WO-A-88/06781
- DE-A- 3 135 385
- DE-A- 3 542 542
- US-A- 4 797 762
- PATENT ABSTRACTS OF JAPAN vol. 006, no. 195 (P-146), 5. Oktober 1982 & JP 57 105863 A (NEC CORP), 1. Juli 1982
- PATENT ABSTRACTS OF JAPAN vol. 011, no. 091 (P-558), 23. März 1987 & JP 61 242378 A (TOKICO LTD), 28. Oktober 1986

## Beschreibung

Die Erfindung betrifft einen Plattenspeicher mit einem kollektorlosen Antriebsmotor.

Ein derartiges Gerät ist aus der DE OS 38 18 994 bekannt. Dieses Gerät weist einen Plattenspeicherantrieb mit einem kollektorlosen Antriebsmotor auf, der einen mit einer Wicklung versehenen Stator und einen den Stator unter Bildung eines Luftspalts koaxial umgreifenden Außenrotor mit einem permanentmagnetischen Rotormagneten aufweist. Eine mit dem Rotormagneten drehfest verbundene Nabe ist mit einem Plattenträgerabschnitt versehen, der zwecks Aufnahme mindestens einer in einem Reinraum angeordneten Speicherplatte hindurchsteckbar ist. Die Statorwicklung und der Rotormagnet sind mindestens zur Hälfte ihrer axialen Länge innerhalb des von dem Plattenträgerabschnitt umschlossenen Raumes untergebracht. Der Rotor und die Nabe sind über eine Lageranordnung auf einer feststehenden Welle drehbar gelagert. Der Innenraum des Motors ist gegenüber dem Reinraum abgedichtet. Am offenen Ende der Rotorglocke ist ein scheibenartiges Ringteil konzentrisch eingepaßt.

Aus der WO-A-8 806 781 ist ein Antrieb für Festplatten bekannt, bei dem der Antriebsmotor einen Stator und einen Außenrotor besitzt. Außerdem ist eine mit einem Plattenträgerabschnitt versehene Nabe mit dem Außenrotor verbunden. Der Außenrotor und die Nabe sind über eine Lageranordnung koaxial um den Innenstator über eine Welle drehbar gelagert. Ein Lager sitzt dabei im Bereich einer Stirnwand des glockenartigen Außenrotorgehäuses und das andere Lager im Bereich des offenen Endes des Außenrotorgehäuses. Zur Vermeidung von thermisch verursachten Laufungenauigkeiten bestehen das Außenrotorgehäuse, eine Lagerhülse, sowie die Platten und Abstandhalter vorzugsweise aus Aluminium.

Bei derartigen Geräten, bzw. Antriebslösungen für derartige Geräte, besteht das Problem, daß auch bei veränderlicher Temperatur die extremen Genauigkeitsanforderungen hinsichtlich der besonderen Qualitätskonstanten, die insbesondere bei Hartplattenspeicherantrieben üblich sind, erfüllt werden. Bei den Genauigkeitsanforderungen handelt es sich in erster Linie um die Laufruhe und um den nicht wiederholbaren Schlag.

Der vorliegenden Erfindung liegt unter anderem die Aufgabe zugrunde, diese Genauigkeit auch bei veränderlicher Temperatur einzuhalten und die Langzeitkonstanz der Genauigkeit zu verbessern.

Die Erfindung wird mit den Mitteln des Anspruch 1 bzw. 12 gelöst.

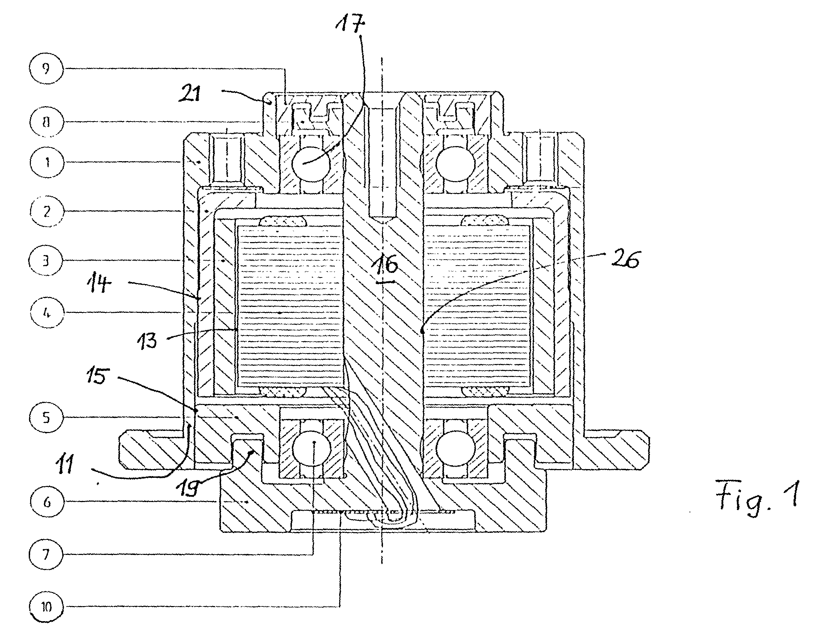

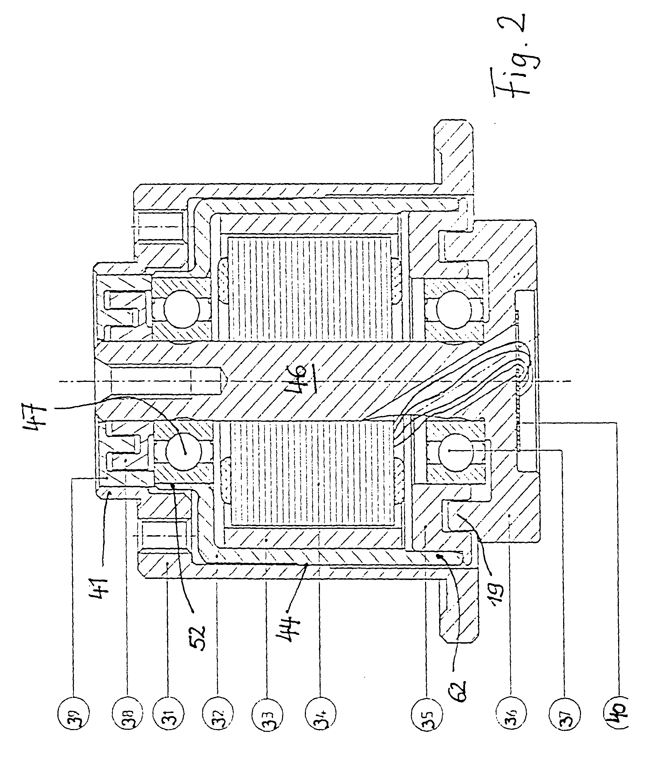

Die Fig. 1 und 2 zeigen in Schnittdarstellungen Ausführungsbeispiele der Erfindung, die im nachfolgenden im Detail erläutert sind.

Fig. 1 zeigt ein Ausführungsbeispiel der Erfindung mit einem kollektorlosen Antriebsmotor, der als Außenläufermotor mit sog. stehender Welle ausgebildet ist. Diese Anordnung hat zur axialen Mittelebene des Statorblechpaketes einen nahezu symmetrierten Motoraufbau bezüglich der Lager 7, 17, bezüglich des Statorblechpakets 4 und bezüglich des Rotormagneten 3.

Die aus Aluminium oder Leichtmetall gefertigte Nabe 1 hat ein hutförmiges Querschnittsprofil. Die Nabe ist auf den magnetischen Rückschlußring 2, der an seinem oberen Ende topfartig etwas abgekröpft ausgebildet ist, aufgesetzt. Die Nabe 1 und der Rückschlußring 2 sind etwa im axialen Zentrum, z.B. im Bereich einer Stelle 14, durch eine Teilverklebung miteinander verbunden. In das topfförmig ausgebildete und ggf. durch Tiefziehen hergestellte Rückschlußeisen 2 ist ein Rotormagnet 3, vorzugsweise in Form eines Permanentmagnetringes 3 eingesetzt, der durch einen zylindrischen Luftspalt 13 von einem Innenstator getrennt ist, zu dem ein Blechpaket 4 und eine Wicklung gehören, die im wesentlichen in axial verlaufenden Nuten des Blechpaketes liegen. Das Statorblechpaket 4 ist über einen Fügespalt 26 mit einer zentralen, stehenden Welle 16 fest verbunden, auf welcher ein oberes Lager 17 und ein unteres Lager 7 mit ihren Innenlaufflächen z.B. aufgepreßt sind. Die zentrale Welle 16 erweitert sich an ihrem unteren Ende einstückig in radialer Richtung zu einem Flansch 6, der zu Halterungszwecken für den Motor dient, gleichzeitig aber auch zusammen mit Vorsprüngen 19, die axial in ein rotierendes Ringteil 5 ragen, zusammen eine Art Labyrinthdichtung bildet. In ähnlicher Weise wird eine Labyrinthdichtung am oberen Ende der zentralen Welle 16 durch entsprechende axiale, nach innen ragende Vorsprünge an einer Dichtungsscheibe gebildet, die in ein über dem oberen Lager 17 sitzendes, entsprechend profiliertes, stationäres Ringteil 8 eingreifen, so daß das obere und untere Lager axial außerhalb abgedichtet sind. Am oberen Lager 17 rotiert die axial äußere, labyrinthartig gestaltete Dichtungsscheibe 9, während am unteren Ende die axial äußere Flanschscheibe 6 mit ihrem axial nach innen ragenden Vorsprung steht.

Die zentrale Welle 16 ist materialeinheitlich und insbesondere einstückig mit dem Flansch 6 ausgebildet. Der Flansch 6 ist gegenüber der Welle 16 im Durchmesser stark vergrößert und besteht aus Leichtmetall oder einer Aluminiumlegierung. Die zentrale Welle 16 trägt an ihrem oberen und unteren Ende die Innenlaufringe der Lager 17 und 7. Der Außenlaufring des unteren Lagers 7 greift in das hochgenaue Einpaßringteil 5 ein und ist auch mit diesem drehfest verbunden. Dieses Ringteil 5 besteht aus dem gleichen Material bzw. einem Material gleicher Wärmedehnung wie die zentrale Welle 16.

Das Ringteil 5 hat sehr genau dimensionierte zylindrische Innen- und Außenflächen, wobei die Außenfläche 15 das hutartige Nabenteil 1 am unteren, offenen Ende an seiner zylindrischen Innenwand aufnimmt. Das Nabenteil 1 besteht aus einem Material gleicher oder ähnlicher Wärmedehnung wie das Ringteil 5. Die Nabe 1 hat an ihrem oben liegenden Boden eine Öffnung mit einer sehr genauen zylindrischen Innenfläche (1a), die mit dem Außenlaufring des oberen Lagers 17 drehfest verbunden ist. Ein sich an den Boden der Nabe 1 anschließender axial nach außen vorragender Rand 21 nimmt die rotierende Dichtungsscheibe 9 auf.

Die Nabe 1 ist aus wirtschaftlichen Gründen und aus Fertigungsgründen aus einer Leichtmetallegierung, vorzugsweise einer Al-Legierung hergestellt. Wichtig ist jedoch vor allem, daß man um das obere und untere Lager 7, 17 herum sozusagen einen geschlossenen Metallkreis ausbildet, (ähnlich einem geschlossenen Kreis), der ein gleichartiges Wärmedehnungsverhalten zeigt. Dadurch kann die Genauigkeit auch bei veränderlichen Temperaturen relativ gut gehalten werden, weil die beteiligten Elemente, nämlich die Nabe 1 und das Ringteil 5, und vorzugsweise auch die zentrale Welle 16, aus Material ähnlicher bzw. gleicher Wärmedehnung gebildet sind.

Dies gilt analog auch für die Ausführung nach Fig. 2, die zur Ausführungsform nach Fig. 1 nur den Unterschied hat, daß hier quasi ein "Stahl-Wärmedehnungskreis" vorhanden ist. Hier ist die zentrale, stehende Welle 46, die sich am unteren Ende zu einem Flansch 36 radial erweitert, aus Stahl, z.B. als Automatendrehteil ausgebildet, und die Zylinderfläche der zentralen Welle 46 trägt oben ein Lager 47 und unten ein Lager 37. Der Außenlaufring des oberen Lagers ist mit einem weichmagnetischen Rückschlußteil 32 konzentrisch, hochgenau, direkt drehfest verbunden, indem dieser Rückschlußtopf 32 am oberen Ende mit in einem axial vorspringenden Kragen 52 versehen ist, der den Außenlaufring des Lagers 47 aufnimmt. Im Bereich des am unteren Rand 62 des milchkannenartigen Tiefziehteils 32, das eine zylindrische Gestalt mit einem im oberen Bereich reduzierten Durchmesser aufweist, ist ein ferromagnetisches Eisen- oder Stahlteil 35 vorgesehen, das entsprechend dem in Fig. 1 als Aluminiumteil gefertigtes Ringteil 15 ausgebildet ist, auf den Außenlaufring des unteren Lagers 37 aufgesetzt, dessen Innenlaufring auf der im Lagerbereich hochgenau bearbeiteten zylindrischen Außenfläche der zentralen stationären ferromagnetischen Welle 46 sitzt.

Die Bauteile 31, 33, 34, 38, 39, 41 und 44 in Fig. 2 entsprechen den Bauteilen 1, 3, 4, 8, 9, 14 und 21 in Fig. 1 und bedürfen daher keiner weiteren Erläuterung. Die Ausführungsform nach Fig. 2 zeigt sozusagen einen vollkommeneren Wärmedehnungsgleichheitskreis als die Ausführungsform nach Fig. 1, denn in Fig. 1 sind in den quasi "Aluminiumkreis" der Teile 1, 5, 16 die aus Stahl bestehenden Lager 7 und 17 eingeschaltet.

Die Bauteile 8, 9 bzw. 5, 6 bilden jeweils ineinandergreifende Dichtungselemente, die als Labyrinthdichtungen bei derartigen Motoren wirken.

Der die Lager umschließende sogenannten Aluminiumkreis in Fig. 1 ist insgesamt etwas wirtschaftlicher in der Herstellung als der noch genauere sogenannte Stahlkreis der Fig. 2, welcher jedoch fertigungstechnisch aufwendiger sein dürfte.

## Patentansprüche

1. Plattenspeicher mit einem kollektorlosen Antriebsmotor, der einen mit einer Wicklung versehenen Stator (4, 6, 16) und einen den Stator (4, 6, 16) unter Bildung eines im wesentlichen zylindrischen Luftspalts (13) koaxial umgreifenden Außenrotor (2, 3) aufweist, sowie mit einer mit dem Außenrotor (2, 3) drehfest verbundenen Nabe (1, 11, 21), die mit einem Plattenträgerabschnitt versehen ist, der durch eine Mittelöffnung mindestens einer in einem Reinraum angeordneten Speicherplatte hindurchgesteckt ist, wobei die Statorwicklung und der damit zusammenwirkende Außenrotor (2, 3) mindestens zur Hälfte ihrer axialen Längsabmessung innerhalb des von dem Plattenträgerabschnitt der Nabe (1, 11, 21) umschlossenen Raumes untergebracht sind, der Außenrotor (2, 3) und die Nabe (1, 11, 21) über eine Lageranordnung (7, 17) koaxial um den Stator über eine Welle (16) drehbar gelagert sind und wobei zwischen dem Innenumfang der Nabe (1, 11, 21) und einem Außenlaufring eines zu der Lageranordnung (7, 17) gehörenden ersten Lagers (7) ein Ringteil (5) hochgenau konzentrisch eingepaßt ist, **dadurch gekennzeichnet, daß** die Nabe (1, 11, 21), die sich an ihrem einen axialen Endbereich an einem Außenlaufring eines zweiten Lagers (17) abstützt, und das Ringteil (5) sowie die Welle (16) aus Material mit im wesentlichen gleicher Wärmedehnung bestehen.

2. Plattenspeicher nach Anspruch 1, **dadurch gekennzeichnet, daß** die Nabe (1, 11, 21) aus Leichtmetall besteht.

3. Plattenspeicher nach Anspruch 1, **dadurch gekennzeichnet, daß** die Nabe ein weichmagnetisches Rückschlußteil (2) des Außenrotors umfaßt.

4. Plattenspeicher nach Anspruch 1, **dadurch gekennzeichnet, daß** die Statorwicklung und der damit zusammenwirkende Motormagnet zu mindestens zwei Drittel ihrer axialen Längsabmessung innerhalb des von dem Plattenträgerabschnitt der Nabe (1) umschlossenen Raums untergebracht sind.

5. Plattenspeicher nach Anspruch 1, **dadurch gekennzeichnet, daß** die Nabe glockenförmig gestaltet ist und das Ringteil (5) am offenen Ende des glockenförmigen Teils eingepaßt ist.

6. Plattenspeicher nach Anspruch 3, **dadurch gekennzeichnet, daß** das weichmagnetische Rückschlußteil (2) die aufgesetzte nichtferromagnetische Nabe (1) trägt.

7. Plattenspeicher nach Anspruch 1, **dadurch gekennzeichnet, daß** die Welle (16) als stehende Welle ausgebildet ist, die sich im Durchmesser zu einem Flansch (6) erweitert, der zur Befestigung des Antriebs geeignet ist.

8. Plattenspeicher nach Anspruch 1, **dadurch gekennzeichnet, daß** axial über dem zweiten Lager (17) und axial unter dem ersten Lager (7) Labyrinthdichtungen (8, 9, 5, 19) vorgesehen sind.

9. Plattenspeicher nach Anspruch 1, **dadurch gekennzeichnet, daß** das einen Teil der Lageranordnung (7, 17) tragende Ringteil (5) als Ring oder Deckel in ein als Nabe (1) ausgebildetes Außenrotorgehäuse eingesetzt ist.

10. Plattenspeicher nach Ansprüchen 7 und 9, **dadurch gekennzeichnet, daß** das Ringteil (5) mit dem Flansch (6) in Axialrichtung mindestens näherungsweise ausgerichtet ist.

11. Plattenspeicher nach Anspruch 1, **dadurch gekennzeichnet, daß** der Antriebsmotor kollektorlos ausgebildet ist und der Außenrotor einen permanentmagnetischen Rotormagneten (3) aufweist.

12. Plattenspeicher mit einem Antriebsmotor, der einen mit einer Wicklung versehenen Stator (34, 36, 46) und einen den Stator (34, 36, 46) unter Bildung eines im wesentlichen zylindrischen Luftspalts koaxial umgreifenden Außenrotor (32, 33) mit glockenartigem Außenrotorgehäuse (32, 52, 62) das das weichmagnetische Rückschlußteil des Außenrotors bildet, aufweist, sowie mit einer mit dem Außenrotor drehfest verbundenen Nabe (31), die mit einem Plattenträgerabschnitt versehen ist, der durch eine Mittelöffnung mindestens einer in einem Reinraum angeordneten Speicherplatte hindurchgesteckt ist, wobei die Statorwicklung und der damit zusammenwirkende Außenrotor (32, 33) mindestens zur Hälfte ihrer axialen Längsabmessung innerhalb des von dem Plattenträgerabschnitt der Nabe (31) umschlossenen Raumes untergebracht sind, der Außenrotor (32, 33) und die Nabe (31) über eine Lageranordnung (37, 47) koaxial um den Stator über eine Welle (46) drehbar gelagert sind, der Stator ein Statorblechpaket (34) aufweist, das fest auf der Welle (46) sitzt, und axial beiderseits des Stators je ein Außen- und Innenlaufringe aufweisendes Wälzlager der Lageranordnung (37, 47) mit seinem einen Laufring auf dieser Welle (46) festsitzt, wobei das eine Lager (47) im Bereich einer Stirnwand (52) des glockenartigen Außenrotorgehäuses (32, 52, 62) und das andere Lager (37) im Bereich eines offenen Endes des Außenrotorgehäuses (32, 52, 62) sitzt, **dadurch gekennzeichnet, daß** das Außenrotorgehäuse (32, 52, 62), das sich an seinem einen axialen Endbereich an dem Außenlaufring des anderen Lagers (37) abstützt, und ein Ringteil (35), das zwischen den Innenumfang des Außenrotorgehäuses (32, 52, 62) und den Außenlaufring des anderen Lagers (37) eingesetzt ist, sowie die Lager (37, 47) aus Material mit im wesentlichen gleicher Wärmedehnung bestehen.

13. Plattenspeicher nach Anspruch 12, **dadurch gekennzeichnet, daß** die feststehende Welle (46) aus Material besteht, das im wesentlichen die gleiche Wärmedehnung wie das Material des Außenrotorgehäuses (32, 52, 62) und das Material des Ringteils (35) hat.

14. Plattenspeicher nach Anspruch 12, **dadurch gekennzeichnet, daß** die Statorwicklung und der damit zusammenwirkende Motormagnet zu mindestens zwei Drittel ihrer axialen Längsabmessung innerhalb des von dem Plattenträgerabschnitt der Nabe (31) umschlossenen Raums untergebracht sind.

15. Plattenspeicher nach Anspruch 12, **dadurch gekennzeichnet, daß** die Nabe (31) aus nichtferromagnetischem Material besteht.

16. Plattenspeicher nach Anspruch 15, **dadurch gekennzeichnet, daß** die Nabe (31) aus Leichtmetall besteht.

17. Plattenspeicher nach Anspruch 12, **dadurch gekennzeichnet, daß** die stehende Welle (46) sich im Durchmesser zu einem Flansch (36) erweitert, der zur Befestigung des Antriebs geeignet ist.

18. Plattenspeicher nach Anspruch 12, **dadurch gekennzeichnet, daß** axial über dem einen Lager (47) und axial unter dem anderen Lager (37) Labyrinthdichtungen (38, 39, 35, 19) vorgesehen sind.

19. Plattenspeicher nach Anspruch 7, 8, 17 oder 18, **dadurch gekennzeichnet, daß** der Flansch (36) axial gerichtete Vorsprünge (19) aufweist, die unter Distanzspiel in das Ringteil (35) so eintauchen, daß zylindrische und radiale ebene Spalte vom Flansch (36) und dem Ringteil (35) mit so kleinen Abständen gebildet werden, daß sie als Labyrinthdichtung wirken.

20. Plattenspeicher nach Anspruch 19, **dadurch gekennzeichnet, daß** die Vorsprünge (19) - gesehen im Längsschnitt durch die Achse - rechteckförmig profiliert sind.

21. Plattenspeicher nach Anspruch 12, **dadurch gekennzeichnet, daß** das einen Teil der Lageranordnung (37) tragende Ringteil (35) als Ring oder Deckel in ein als Nabe (31) ausgebildetes Außenrotorgehäuse eingesetzt ist.

22. Plattenspeicher nach Ansprüchen 17 und 21, **dadurch gekennzeichnet, daß** das Ringteil (35) mit dem Flansch (36) in Axialrichtung mindestens näherungsweise ausgerichtet ist.

23. Plattenspeicher nach Anspruch 12, **dadurch gekennzeichnet, daß** der Antriebsmotor kollektorlos ausgebildet ist, und der Außenrotor einen permanentmagnetischen Rotormagneten (33) aufweist.

## Claims

1. Disk storage device comprising
a collectorless drive motor having a stator (4,6,16) provided with a winding and an outside rotor (2,3) coaxially surrounding said stator (4,6,16) and forming a substantially cylindrical air gap (13) therebetween, and
a hub (1,11,21) connected for rotation to said outside rotor (2,3) and being provided with a disc support section passed through a central opening of at least one storage disc disposed in a clean room or space, said stator winding and said outside rotor (2,3) co-operating therewith being accomodated by at least one half of their axial length dimension within said space enclosed by said disc support section of said hub (1,11,21), said outside rotor (2,3) and said hub (1,11,21) being supported for rotation by a bearing arrangement (7,17), coaxially around said stator, through a shaft (16), an annular member (5) being fitted concentrically with high precision between the innner circumference of said hub (1,11,21) and an outer bearing race of a first bearing (7) belonging to said bearing arrangement (7,17),
**characterized in that** said hub (1,11,21) which has one of its axial end regions supported on an outer bearing race of a second bearing (17), as well as said annular member (5) and said shaft (16) are made of a material having substantially the same rate of thermal expansion.

2. Disc storage device according to claim 1, **characterized in that** said hub (1,11,21) is made of light metal.

3. Disc storage device according to claim 1, **characterized in that** said hub comprises a soft magnetic return (current) part (2) of said outside rotor.

4. Disc storage device according to claim 1, **characterized in that** said stator winding and the motor magnet cooperating therewith are accomodated within the space enclosed by the disc support section of said hub (1) by at least two thirds of their axial length dimension.

5. Disc storage device according to claim 1, **characterized in that** said hub is of a bell-shaped form and that said annular member (5) is fitted into the open end of the bell-shaped part.

6. Disc storage device according to claim 3, **characterized in that** said soft magnetic return (current) part (2) supports said non-ferromagnetic hub (1) placed thereon.

7. Disc storage device according to claim 1, **characterized in that** said shaft (16) is configured as a stationary shaft expanding in its diameter to a flange (6) suited for attachment of the drive (unit).

8. Disc storage device according to claim 1, **characterized in that** labyrinth seals (8,9,5,19) are provided axially above said second bearing (17) and axially below said first bearing (7).

9. Disc storage device according to claim 1, **characterized in that** said annular member (5) supporting part of said bearing arrangement (7,17) is fitted as a ring or cover into an outside rotor casing configured as hub (1).

10. Disc storage device according to claim 7 and 9,
**characterized in that** said annular member (5) is at least approximately in alignment with said flange (6) in the axial direction.

11. Disc storage device according to claim 1, **characterized in that** said drive motor is configured without collector and that said outside rotor comprises a permanent-magnetic rotor magnet (3).

12. Disc storage device, comprising
a drive motor including a stator (34,36,46) provided with a winding, and an outside rotor (32,33) coaxially surrounding said stator (34,36,46) while forming a substantially cylindrical air gap (therebetween), said outside rotor having a bell-shaped outside rotor casing (32,52,62) forming said soft magnetic return (current) part of said ouboard rotor, and
a hub (31) connected for rotation to said outside rotor and being provided with a disc support section passed through a central opening of at least one storage disc disposed in a clean room or space, said stator winding and said outside rotor (32,33) cooperating therewith being accomodated by at least one half of their axial length dimension within said space enclosed by said disc support section of said hub (31), said outside rotor (32,33) and said hub (31) being supported for rotation, coaxially around said stator, through a shaft (46), said stator comprising a stator lamination stack (34) fixedly mounted on said shaft (46), axially on opposite sides of said stator, an antifriction bearing of said bearing arrangement (37,47), comprising an outer race and and inner race, respectively, being fixedly seated with said one of its races on said shaft (46), with one bearing (47) being located in proximity to a front wall (52) of said bell-shaped outside rotor casing (32,52,62) and the other bearing (37) being located in proximity to an open end of said outside rotor casing (32,52,62),
**characterized in that**
said outside rotor casing (32,52,62) which has one of its axial end regions supported on the outer race of said other bearing (37), as well as an annular member (35) fitted between the inner circumference of said outside rotor casing (32,52,62) and the outer race of said other bearing (37), and said bearings (37,47) are made of a material having substantially the same rate of thermal expansion.

13. Disc storage device according to claim 12, **characterized in that** said stationary shaft (46) consists of a material having substantially the same thermal expansion as the material of said outside rotor casing (32,52,62) and the material of said annular member (35).

14. Disc storage device according to claim 12, **characterized in that** said stator winding and said motor magnet cooperating therewith are accomodated by at least two thirds of their axial length dimension within the space enclosed by the disc support section of said hub (31).

15. Disc storage device according to claim 12, **characterized in that** said said hub (31) is made of non-ferromagnetic material.

16. Disc storage device according to claim 15, **characterized in that** said said hub (31) is made of light metal.

17. Disc storage device according to claim 12, **characterized in that** said stationary shaft (46) expands in its diameter to a flange (36) suited for attachment of said drive (unit).

18. Disc storage device according to claim 12, **characterized in that** labyrinth seals (38,39,35,19) are provided axially above said one bearing (47) and axially below said other bearing (37).

19. Disc storage device according to claim 7, 8, 17 or 18, **characterized in that** said flange (36) comprises axially directed protrusions (19) which, with a distance gap, are immersed into said annular member (35) such that cylindrical and radial planar gaps are formed by said flange (36) and said annular member (35), said gaps being formed with spacings so small as to act as a labyrinth sealing.

20. Disc storage device according to claim 19, **characterized in that** said protrusions (19) - as viewed in their longitudinal cross-section through the axis - are rectangularly shaped.

21. Disc storage device according to claim 12, **characterized in that** said annular member (35) supporting part of said bearing arrangement (37) is fitted as a ring or cover into an outside rotor casing configured as a hub (31).

22. Disc storage device according to claims 17 and 21,
**characterized in that** said annular member (35) is at least approximately in alignment with said flange (36) in the axial direction.

23. Disc storage device according to claim 12, **characterized in that** said drive motor is configured without collector, and that said outside rotor comprises a permanent-magnetic rotor magnet (33).

## Revendications

1. Appareil pour disque d'enregistrement, avec un moteur d'entraînement sans collecteur, qui présente un stator (4, 6, 16) doté d'un enroulement et un rotor extérieur (2, 3) entourant coaxialement le stator (4, 6, 46) en constituant un entrefer (13) sensiblement cylindrique, ainsi qu'avec un moyeu (1, 11, 21) assujetti à rotation au rotor extérieur (2, 3) et pourvu d'un tronçon de support de disque qui est enfiché à travers une ouverture centrale d'au moins un disque de mémoire disposé dans une enceinte propre, l'enroulement de stator et le rotor extérieur (2, 3) coopérant avec lui étant logés, au moins jusqu'à la moitié de leur dimension axiale en longueur, à l'intérieur de l'espace entouré par le tronçon de support de disque du moyeu (1, 11, 21), le rotor extérieur (2, 3) et le moyeu (1, 11, 21) étant montés à rotation par l'intermédiaire d'un dispositif palier (7, 11) coaxialement autour du stator, par l'intermédiaire d'un arbre (16), et, entre la périphérie intérieure du moyeu (1, 11, 21) et une bague mobile extérieure d'un premier palier (7) appartenant au dispositif palier (7, 17), ètant introduit, de façon ajustée concentriquement avec une haute précision, une partie annulaire (5), **caractérisée en ce que** le moyeu (1, 11, 21), qui prend appui sur une de ses zones d'extrémités axiales sur une bague mobile extérieure d'un deuxième palier (17), et la partie annulaire (5) ainsi que l'arbre (16), sont constitués dlun matériau ayant un coefficient de dilatation thermique sensiblement identique.

2. Entraînement de disque d'enregistrement, selon la revendication 1, **caractérisé en ce que** le moyeu (1, 11, 21) est réalisé en métal léger.

3. Entraînement de disque d'enregistrement, selon la revendication 1, **caractérisé en ce que** le moyeu entoure une partie de bouclage (2) magnétiquement douce du rotor extérieur.

4. Entraînement de disque d'enregistrement, selon là revendication 1, **caractérisé en ce que** l'enroulement de stator et l'élément de moteur coopérant avec lui sont logés, pour au moins deux tiers de leur dimension axiale en longueur, à l'intérieur de l'espace enclos par le tronçon de support de disque du moyeu (1).

5. Entraînement de disque d'enregistrement, selon la revendication 1, **caractérisé en ce que** le moyeu a une forme en cloche et la partie annulaire (5) est introduite de façon ajustée à l'extrémité ouverte de la partie en forme de cloche.

6. Entraînement de disque d'enregistrement, selon la revendication 3, **caractérisé en ce que** la partie de bouclage (2) magnétiquement douce porte le moyeu (1) monté dessus, qui n'est pas ferromagnétique.

7. Entraînement de disque d'enregistrement, selon la revendication 1, **caractérisé en ce que** l'arbre (16) est réalisé sous la forme d'arbre stationnaire, allant s'élargissant en diamétre pour former une bride (6) qui convient pour la fixation de l'entraînement.

8. Entraînement de disque d'enregistrement, selon la revendication 1, **caractérisé en ce que** des joints d'étanchéité à labyrinthe (8, 9" 5, 19) sont prèvus axialement sur le deuxième palier (17) et axialement sous le premier palier (7).

9. Entraînement de disque d'enregistrement, selon la revendication 1, **caractérisé en ce que** la partie annulaire (5) portant une partie de l'agencement de palier (7, 17) est insérée sous forme d'anneau ou de couvercle dans un carter de rotor extérieur réalisé sous la forme de moyeu (1).

10. Entraînement de disque d'enregistrement, selon les revendications 7 et 9, **caractérisé en ce que** la partie annulaire (5) et la bride (6) sont orientées au moins à peu prés en direction axiale.

11. Entraînement de disque d'enregistrement, selon la revendication 1, **caractérisé en ce que** le moteur d'entraînement est de réalisation sans collecteur et le rotor extérieur présente un aimant de rotor (3) à magnétisme permanent.

12. Entrainement de disque d'enregistrement, équipé d'un moteur d'entrainement, qui présente un stator (34, 36, 46) pourvu d'un enroulement et un rotor extérieur (32, 33) entourant coaxialement le stator (34, 36, 46) en formant un entrefer sensiblement cylindrique, avec un carter de rotor extérieur (32, 52, 62) du genre d'une cloche qui constitue la partie de bouclage magnétique douce du rotor extérieur, ainsi, qu'avec un moyeu (31) assujetti en rotation au rotor extérieur, pourvu d'un tronçon de support de disque, susceptible d'être enfiché à travers une ouverture centrale d'au moins un disque de mémoire disposé dans une enceinte propre, l'enroulement de stator et le rotor extérieur (32, 33) coopérant avec lui étant logés au moins jusqu'à la moitié de leur dimension axiale en longueur à l'intérieur de l'espace entouré par le tronçon de support de disque du moyeu (31), le rotor extérieur (32, 33) et le moyeu (31) étant montés à rotation coaxialement autour du stator, sur un arbre (46), par l'intermédiaire d'un agencement de palier (37, 47), le stator présentant un paquet de tôle stator (34) monté rigidement sur l'arbre (46), et axialement des deux côtés du stator, respectivement, un palier à roulement présentant des bagues mobiles extérieures et intérieures et appartenant à l'agencement de palier (37, 47), avec une bague mobile de celui-ci monté rigidement sur cet arbre (46), un palier (47) étant monté dans la zone d'une paroi frontale (52) du carter de rotor extérieur (32, 52, 62) du genre d'une cloche et l'autre palier (37) étant monté dans la zone d'une extrémité ouverte du carter du rotor extérieur (32, 52, 62), **caractérisé en ce que** le carter de rotor extérieur (32, 52, 62), qui prend appui sur une de ses zones d'extrémités axiales sur la bague mobile extérieure de l'autre palier (37), et une partie annulaire (35), qui est insérée entre la périphérie intérieure du carter du rotor extérieurs (32, 52, 62) et la bague mobile extérieure de l'autre palier (37), ainsi que les palier (37, 47), sont réalisés en matériau ayant un coefficient de dilatation thermique sensiblement identique.

13. Entraînement de disque d'enregistrement, selon la revendication 12, **caractérisé en ce que** l'arbre stationnaire (46) est réalisé en un matériau ayant sensiblement le même coefficient de dilatation thermique que le matériau de carter de rotor extérieur (32, 52, 62) et le matériau de la partie annulaire (35).

14. Entraînement de disque d'enregistrement, selon la revendication 12, **caractérisé en ce que** l'enroulement de stator et l'aimant moteur coopérant avec lui sont logés, jusqu'à au moins deux tiers de leur dimension axiale en longueur, à l'intérieur de l'espace enclos par le tronçon support de disque du moyeu (31).

15. Entrainement de disque d'enregistrement, selon la revendication 12, **caractérisé en ce que** le moyeu (31) est constitué d'un matériau non ferromagnétique.

16. Entraînement de disque d'enregistrement, selon la revendication 15, **caractérisé en ce que** le moyeu (31) est réalisé en métal léger.

17. Entraînement de disque d'enregistrement, selon la revendication 12, **caractérisé en ce que** l'arbre stationnaire (46) va en s'élargissant en diamètre pour constituer une bride (36) convenant pour la fixation de l'entraînement.

18. Entraînement de disque d'enregistrement, selon la revendication 12, **caractérisé en ce que** des joints d'étanchéité à labyrinthe (38, 39, 35, 19) sont prévus axialement sur un palier (47) et axialement sous l'autre palier (37).

19. Entraînement de disque d'enregistrement, selon la revendication 7, 8, 17 ou 18, **caractérisé en ce que** la bride (36) présente des saillies (19) orientées axialement, qui plongent avec un jeu d'espacement dans la partie annulaire (35), **en ce que** des interstices cylindriques et radiaux plans de la bride (36) et de la partie annulaire (35) sont constitués avec des espacements si petits qu'ils agissent comme joint d'étanchéité labyrinthe.

20. Entraînement de disque d'enregistrement, selon la revendication 19, **caractérisé en ce que** les saillies (19) observées en coupe longitudinale passant par l'axe - ont un profil à forme rectangulaire.

21. Entraînement de disque d'enregistrement, selon la revendication 12, **caractérisé en ce que** la partie annulaire (35) portant une partie de l'agencement de palier (37) est insérée sous forme d'anneau ou de couvercle dans un carter de rotor extérieur réalisé sous forme de moyeu (31).

22. Entraînement de disque d'enregistrement, selon les revendications 17 et 21, **caractérisé en ce que** la partie annulaire (35) et la bride (36) sont orientées au moins à peu près en direction axiale.

23. Entraînement de disque d'enregistrement, selon la revendication 12, **caractérisé en ce que** le moteur d'entraînement est de réalisation sans collecteur et le rotor extérieur présente un aimant de rotor (33) à magnétisme permanent.
